# EUROPÄISCHE PATENTSCHRIFT

(11) **EP 3 025 100 B1**
(45) Veröffentlichungstag und Bekanntmachung des Hinweises auf die Patenterteilung: **10.01.2018**
(21) Anmeldenummer: 14750692.7
(22) Anmeldetag: 18.07.2014
(51) Int. Cl.: F24D 19/10

(54) **HEIZSYSTEM UND BETRIEBSVERFAHREN DAFÜR**
HEATING SYSTEM AND METHOD FOR OPERATING SAME
SYSTÈME DE CHAUFFAGE ET PROCÉDÉ DE FONCTIONNEMENT DE CE SYSTÈME

(30) Priorität: 22.07.2013 DE 102013012080
(43) Veröffentlichungstag der Anmeldung: 01.06.2016
(73) Patentinhaber: Innotemp GmbH, 82205 Gilching (DE)
(72) Erfinder: VON HEYMANN, Sönke, 80997 München (DE); STAHL, Helmut, 82211 Herrsching (DE)
(74) Vertreter: Heuer, Wilhelm
(86) Internationale Anmeldenummer: PCT/EP2014/001964
(87) Internationale Veröffentlichungsnummer: WO 2015/010779

(56) Entgegenhaltungen:
- EP-A1- 1 508 751
- EP-A2- 1 564 616
- DE-U1-202011 101 087

## Beschreibung

Die vorliegende Erfindung betrifft ein Heizsystem, insbesondere zum Beheizen von Räumen in Gebäuden, sowie Verfahren zum Betreiben eines solchen Heizsystems.
Heizsysteme mit Thermostaten, welche die Temperatur eines zu beheizenden Raumes mehr oder weniger exakt erfassen und anhand eines Vergleichs dieser erfassten Temperatur mit einer Solltemperatur den Durchfluss eines Wärmeträgermediums durch einen Wärmetauscher wie etwa einen Radiator, eine Fußbodenheizung oder dergleichen steuern, sind seit vielen Jahren bekannt und in Gebrauch. Typischerweise sind die Ventile derartiger herkömmlicher Heizsysteme entweder vollständig offen, solange die Raumtemperatur noch unter einer Solltemperatur liegt, damit diese in möglichst kurzer Zeit erreicht wird, oder sie sind vollständig geschlossen, wenn die Solltemperatur erreicht oder überschritten ist. Durch Hin- und Herschalten zwischen offenem und geschlossenem Zustand wird versucht, die Temperatur eines Raumes in engen Grenzen konstant und auf einem für seine Bewohner angenehmen Wert zu halten.
In der Praxis gelingt dies regelmäßig nicht, bei gleichbleibender Thermostateinstellung kann ein Raum von seinen Bewohnern mal als zu warm, mal als zu kalt empfunden werden. In ersterem Falle neigen viele Bewohner dazu, die Raumtemperatur durch Lüften zu reduzieren. In letzterem Falle wird der Thermostatwert manuell erhöht, mit der Folge, dass später der Raum erst recht als zu warm empfunden und umso mehr gelüftet wird. Ein komfortables Raumklima wird nicht dauerhaft erreicht, aber viel Heizenergie wird verbraucht. Ein Heizsystem mit einer Regelschaltung, die sowohl die Raumtemperatur als auch die Rücklauftemperatur berücksichtigt, ist in der DE202011101087U1 offenbart. Es besteht daher erheblicher Bedarf nach Heizsystemen, die in der Lage sind, angenehme Raumtemperaturen dauerhaft und bei geringem Einsatz von Heizenergie bereit zu stellen.

Die Aufgabe wird erfindungsgemäß gelöst, indem bei einem Heizsystem mit wenigstens einem ersten Temperaturfühler zum Erfassen einer Raumtemperatur eines zu beheizenden Raumes, wenigstens einem Ventil zum Steuern des Durchflusses eines Wärmeträgermediums durch einen Wärmetauscher anhand von Stellbefehlen und einer mit dem ersten Temperaturfühler und dem Ventil verbundenen Regelschaltung zum Erzeugen der Stellbefehle die Regelschaltung mit einem zweiten Temperaturfühler verbunden ist, der angeordnet ist, um eine erste Temperatur des Wärmeträgermediums nach Durchlaufen wenigstens eines Teils des Wärmetauschers zu erfassen, und eingerichtet ist, die Stellbefehle auf Grundlage der ersten Temperatur als Regelgröße zu erzeugen, wenn die Raumtemperatur über einem Raumtemperatur-Sollwert liegt.

Die Wirksamkeit dieser Lösung basiert auf dem Einfluss der Wärmestrahlung. Während bei einem herkömmlichen thermostatgeregelten Heizsystem bei offenem Ventil der Wärmetauscher deutlich wärmer als der Raum ist und er selbst oder von ihm erwärmte Oberflächen Wärmestrahlung abgeben, die vom Körper eines Bewohners aufgefangen wird, fließt bei geschlossenem Ventil Wärme aus dem Raum ab, so dass die Wände und auch der Wärmetauscher nach einiger Zeit in Relation zur Raumluft nicht warm genug sind. Sie geben nun keine ausreichende Wärmestrahlung mehr ab, sondern absorbieren teilweise selbst die von einem Bewohner abgegebene Wärmestrahlung, so dass der Raum, auch ohne dass sich die Lufttemperatur darin ändert, vom Bewohner als kalt empfunden wird. Indem erfindungsgemäß dann, wenn die Solltemperatur des Raumes erreicht oder überschritten ist, der Durchfluss des Wärmeträgermediums durch den Wärmetauscher nicht vollständig unterbrochen sondern ein im Folgenden als Auskühlvermeidungsbetrieb bezeichneter Betriebsmodus gefahren wird, in welchem der Durchfluss des Wärmeträgermediums durch den Wärmetauscher anhand der ersten Temperatur als Regelgröße geregelt wird, kann eine weitere Erwärmung des Raumes nach Erreichen der Solltemperatur vermieden, gleichzeitig aber eine Auskühlung des Wärmetauschers bzw. von durch ihn erwärmten Wänden des Raums vermieden werden, so dass eine unangenehme Abkühlung der Bewohner durch Abgabe von Strahlungswärme vermieden werden kann. Die Raumtemperatur wird daher als gleichmäßiger empfunden. Da starke Wärmeverluste durch Strahlung vermieden werden, genügt eine niedrigere Raumtemperatur, um ein angenehmes Wohnklima aufrecht zu erhalten.

Ein Umschalten der Regelschaltung vom Heizbetrieb auf den Auskühlvermeidungsbetrieb findet vorzugsweise nicht unmittelbar bei Erreichen des Raumtemperatur-Sollwerts statt, sondern erst, wenn eine Umschaltschwelle überschritten ist, die typischerweise um 0,3-0,5°C über dem Raumtemperatur-Sollwert liegt.

Die erste Temperatur kann insbesondere eine an einem Auslass des Wärmetauschers gemessene Rücklauftemperatur sein.

Während des Heizbetriebs sollte die Regelschaltung die von dem ersten Temperaturfühler erfasste Raumtemperatur als Regelgröße einsetzen.

Im Heizbetrieb wird die erste Temperatur im Allgemeinen deutlich höher als die von dem ersten Temperaturfühler erfasste tatsächliche Raumtemperatur sein. Damit beim Übergang von Heizbetrieb in den Auskühlvermeidungsbetrieb die Wärmezufuhr gedrosselt, aber nicht vollständig unterbrochen wird, ist es meist sinnvoll, im Auskühlvermeidungsbetrieb einen Sollwert der ersten Temperatur zu wählen, der ebenfalls höher als der Raumtemperatur-Sollwert ist.

Wie stark die Sollwerte der Raumtemperatur und der ersten Temperatur zweckmäßigerweise auseinanderliegen sollten, hängt von den Eigenschaften des zu beheizenden Raumes ab, insbesondere von der Qualität seiner Wärmedämmung. Daher sollte eine Schnittstelle vorgesehen sein, an der ein Benutzer den Sollwert der ersten Temperatur einstellen kann.

Einer bevorzugten Ausgestaltung zufolge umfasst die Regelschaltung einen ersten Regler zum Festlegen eines Sollwerts einer zweiten Temperatur des Wärmeträgermediums anhand der Raumtemperatur und einen zweiten Regler zum Erzeugen der Stellbefehle auf Grundlage der erfassten zweiten Temperatur als Regelgröße. Eine solche mehrstufige Regelung erleichtert insbesondere die Berücksichtigung unterschiedlicher Eigenschaften von zu beheizenden Räumen und ihren Wärmetauschern und die darauf basierende Parametrierung der Regelschaltung. So kann der erste Regler ein einheitliches Aufheizverhalten von unterschiedlich großen Räumen oder Räumen mit unterschiedlich großen Wärmetauschern durch Verwendung einer an den jeweils zu beheizenden Raum angepassten Reglerparametrierung erzielen, insbesondere indem im Falle eines großen Raumes bzw. eines Raumes mit einem kleinen Wärmetauscher bei gegebener Sollwertabweichung der Raumtemperatur die Solltemperatur des Wärmeträgermediums für einen kleinen Wärmetauscher bzw. einen großen Raum höher festgelegt wird als für einen großen Wärmetauscher bzw. kleinen Raum. Die Reglerparametrierung des zweiten Reglers wird zwar im Allgemeinen vom Typ des verwendeten Wärmetauschers, wie etwa Radiator oder Fußbodenheizung, abhängen, kann aber für alle Räume, die einen gleichen Typ von Wärmetauscher enthalten, dieselbe sein.

Auch die Implementierung von Grenzen der zweiten Temperatur, die während des Betriebs nicht oder zumindest nicht dauerhaft überschritten werden sollten, ist mit Hilfe der mehrstufigen Regelung einfach.

Die mehrstufige Regelung ermöglicht ferner, unterschiedliches Zeitverhalten der einzelnen Stufen zu realisieren. Indem die zweite Reglerstufe schneller ist als der erste, ist eine hohe Regeldynamik erreichbar.

Im einfachsten Fall könnte die zweite Temperatur des Wärmeträgermediums mit der ersten Temperatur identisch sein, d.h. die von dem zweiten Temperaturfühler erfasste Temperatur sein. Bevorzugt ist allerdings, dass ein dritter Temperaturfühler zum Erfassen der zweiten Temperatur des Wärmeträgermediums stromaufwärts vom zweiten Temperaturfühler am Wärmetauscher selbst oder an einer stromaufwärts vom Wärmetauscher gelegenen Vorlaufleitung des Wärmetauschers vorgesehen ist.

Wenigstens einer der Regler sollte einen Integralanteil aufweisen, um sicherzustellen, dass die Sollwerte der Raumtemperatur im Betrieb des Heizsystems tatsächlich erreicht werden können.

Vorzugsweise hat wenigstens der erste Regler einen solchen Integralanteil. Dies ist insbesondere dann zweckmäßig, wenn der von dem ersten Regler erzeugte Sollwert der zweiten Temperatur nicht nur als Führungsgröße für den zweiten Regler, sondern auch noch für andere Zwecke eingesetzt wird.

Ein Integralanteil des zweiten Reglers kann vorgesehen werden, wenn sicherzustellen ist, dass Grenzwerte der Temperatur des Wärmeträgermediums, insbesondere der ersten und/oder der zweiten Temperatur, im Betrieb des Heizsystems nicht über- bzw. unterschritten werden.

Die Regelschaltung kann ferner mit einer Wärmequelle verbunden sein, um die Abgabetemperatur des von der Wärmequelle abgegebenen Wärmeträgermediums anhand des Sollwerts der zweiten Temperatur des Wärmeträgermediums zu regeln. Da die Abgabetemperatur nicht höher sein muss, als notwendig, um diesen Sollwert zu erreichen, kann die Abgabetemperatur niedrig gehalten werden und Wärmeverluste auf dem Weg des Wärmeträgermediums von der Wärmequelle zum Wärmetauscher können begrenzt werden.

Zweckmäßigerweise ist die Regelschaltung eingerichtet, die Abgabetemperatur heraufzusetzen, wenn der Sollwert der zweiten Temperatur bei vollständig geöffnetem Ventil nicht erreicht wird.

Wenn die Regelschaltung mit mehreren, jeweils verschiedenen Räumen zugeordneten ersten Temperaturfühlern verbunden ist, kann jedem der ersten Temperaturfühler ein erster Regler zum Festlegen eines Sollwerts der zweiten Temperatur für den betreffenden Raum anhand der von diesem ersten Temperaturfühler erfassten Raumtemperatur zugeordnet sein. Die Regelschaltung ist dann zweckmäßigerweise eingerichtet, die Abgabetemperatur anhand des höchsten festgelegten Sollwerts der zweiten Temperatur zu regeln. Der Wärmetauscher, der diese Solltemperatur benötigt, kann dann mit vollständig geöffnetem Ventil betrieben werden; andere Wärmetauscher, die eine so hohe Temperatur nicht benötigen, können mit teilweise geschlossenem Ventil betrieben werden.

Ein teilweise geschlossener Zustand kann bei einem Ventil, das nur einen offenen oder einen geschlossenen Zustand stabil einnehmen kann, in guter Näherung realisiert werden, indem in kurzen Zeitabständen zwischen offenem und geschlossenem Zustand umgeschaltet wird. Da eine solche häufige Umschaltung jedoch mit störenden Geräuschen verbunden sein kann, ist im Rahmen der vorliegenden Erfindung die Verwendung von Ventilen bevorzugt, an denen Öffnungsgrade zwischen einem maximal geöffneten und einem gesperrten Zustand einstellbar sind.

Bei einem Heizsystem, das mehrere Ventile zum Steuern des Durchflusses des Wärmeträgermediums durch jeweils einem dem Ventil zugeordneten Wärmetauscher und eine Umwälzpumpe zum Antreiben des Flusses des Wärmeträgermediums umfasst, ist es an sich bekannt, den Durchsatz der Pumpe in Abhängigkeit von einer Druckdifferenz zwischen Saug- und Druckanschluss der Pumpe zu steuern. Wenn ein Ventil geöffnet wird, bewirkt dies zunächst eine Verringerung der Druckdifferenz, woraufhin der Durchsatz der Pumpe heraufgesetzt wird, um die Soll-Druckdifferenz wiederherzustellen und den dem Ventil zugeordneten Wärmetauscher mit Wärmeträgermedium zu versorgen. Diese Technik erfordert einen kontinuierlichen Betrieb der Umwälzpumpe auch dann, wenn sämtliche Ventile geschlossen sind. Indem erfindungsgemäß die Steuerschaltung die Umwälzpumpe immer dann ausschaltet, wenn alle Ventile geschlossen sind, kann einerseits die Antriebsenergie für die Pumpe eingespart werden, andererseits werden Wärmeenergieverluste vermieden, die herkömmlicherweise auftreten würden, wenn Wärmeträgermedium ungenutzt zirkuliert.

Des weiteren kann bei einem solchen Heizsystem mit mehreren den Durchfluss des Wärmeträgermediums durch jeweils einen Wärmetauscher steuernden Ventilen die Regelschaltung eingerichtet sein, den Öffnungsgrad jedes Ventils einzeln zu erfassen und die Leistung der Umwälzpumpe anhand der Öffnungsgrade der Ventile zu steuern. Eine solche Erfassung kann auf einer Rückmeldung des jeweils eingestellten Öffnungsgrades von jedem Ventil an die Regelschaltung basieren; wenn die Regelschaltung, wie oben beschrieben, selbst Stellbefehle für die Ventile erzeugt, ist der mit diesen Befehlen zu realisierende Öffnungsgrad eines jeden Ventils in der Steuerschaltung bereits bekannt, ohne übertragen werden zu müssen.

Die Kenntnis des Öffnungsgrades eines jeden Ventils ermöglicht der Regelschaltung, beim Steuern der Leistung der Umwälzpumpe nicht alle Ventile gleich zu gewichten, sondern auch den zum Versorgen eines Wärmetauschers zu überwindenden und je nach Anordnung des Wärmetauschers im Gebäude unterschiedlichen Strömungswiderstand zu berücksichtigen. So kann ausgehend von einer üblicherweise im Keller eines Gebäudes angeordneten Wärmequelle die zum Versorgen eines Wärmetauschers in einem Obergeschoß erforderliche Leistung der Umwälzpumpe höher sein als die, die für die Versorgung eines gleich großen Wärmetauschers im Erdgeschoß benötigt wird. Während die für den Wärmetauscher im Erdgeschoß ausreichende Leistung am Wärmetauscher des Obergeschosses möglicherweise nur einen unzureichenden Durchfluss bewirkt, kann eine für den Wärmetauscher des Obergeschosses ausreichende Pumpenleistung am Wärmetauscher im Erdgeschoß zu störenden Strömungsgeräuschen führen. Indem die Regelschaltung den Öffnungsgrad jedes einzelnen Ventils kennt, ist sie in der Lage, dies zu berücksichtigen und eine ausreichende Wärmeversorgung aller Wärmetauscher ohne störende Betriebsgeräusche zu gewährleisten.

Die Aufgabe wird ferner gelöst durch ein Verfahren zum Betreiben eines Heizsystems mit den Schritten:
- Erfassen einer Raumtemperatur eines zu beheizenden Raumes,
- Erfassen einer ersten Temperatur eines Wärmeträgermediums nach Durchlaufen wenigstens eines Teils eines Wärmetauschers,
- wenn die Raumtemperatur über einem Raumtemperatur-Sollwert liegt, Steuern des Durchflusses eines Wärmeträgermediums durch den Wärmetauscher unter Einsatz der ersten Temperatur als Regelgröße.

Gegenstand der Erfindung ist ferner ein Verfahren zum Betreiben eines Heizsystems mit den Schritten:
- Erfassen von Raumtemperaturen mehrerer zu beheizender Räume,
- für jeden Raum Festlegen einer Wärmeträgermedium-Solltemperatur anhand der erfassten Raumtemperatur,
- Ausgeben von Wärmeträgermedium mit der höchsten Wärmeträgermedium-Solltemperatur aus einer Wärmequelle.

Die Festlegung der Wärmeträgermedium-Solltemperatur wird im Allgemeinen in Abhängigkeit von einer Differenz zwischen erfasster Raumtemperatur und Soll-Raumtemperatur erfolgen. Je weiter die erfasste Raumtemperatur unter der Solltemperatur liegt, um so höher sollte im Allgemeinen die Wärmeträgermedium-Solltemperatur sein, damit die Raumtemperatur ihren Sollwert in akzeptabler Zeit erreichen kann. Eine derartige dynamische Anpassung der Wärmeträgermedium-Solltemperatur erlaubt es, Schwankungen des Wärmebedarfs eines Raumes, zum Beispiel aufgrund von wechselnder Sonneneinstrahlung, Rechnung zu tragen und zum Beispiel ein Überheizen bei geringem Wärmebedarf bzw. eine zu langsame Erwärmung bei hohem Wärmebedarf zu vermeiden. Indem Wärmeträgermedium mit der höchsten festgelegten Solltemperatur ausgegeben wird, ist sichergestellt, dass alle Räume ausreichend beheizt werden können, gleichzeitig wird unnötiger Energieaufwand vermieden, da die Ausgabetemperatur des Wärmeträgermediums nur gerade so hoch ist, wie zum Beheizen des Raumes mit der höchsten Wärmeträgermedium-Solltemperatur erforderlich.

Erfindungsgegenstand ist ferner ein Verfahren zum Betreiben eines Heizsystems mit mehreren parallel gespeisten, durch Ventile geregelten Wärmetauschern mit den Schritten:
- Erfassen des Öffnungsgrades jedes einzelnen Ventils; und
- Steuern des Durchsatzes einer Umwälzpumpe anhand der erfassten Öffnungsgrade.

Wie bereits oben dargelegt, ermöglicht die Einzelerfassung der Öffnungsgrade, auch die Position eines von dem Ventil versorgten Wärmetauschers im Gebäude bzw. die Länge des Weges zwischen Umwälzpumpe und Wärmetauscher beim Steuern der Leistung der Pumpe zu berücksichtigen.

Ein weiterer Erfindungsgegenstand ist ein Computerprogramm-Produkt mit Programmcode-Mitteln, die einen Computer befähigen, als eine Regelschaltung oder ein Regler einer Regelschaltung in einem Heizsystem wie oben beschrieben zu arbeiten oder eines der oben beschriebenen Verfahren auszuführen. Das Computerprogramm-Produkt kann insbesondere als Speicherinhalt eines Mikroprozessorsystems oder, in von dem Mikroprozessorsystem losgelöster Form, auf einem Datenträger, vorliegen.

Weitere Merkmale und Vorteile der Erfindung ergeben sich aus der nachfolgenden Beschreibung von Ausführungsbeispielen unter Bezugnahme auf die beigefügten Figuren. Es zeigen
- Fig. 1: ein Blockdiagramm eines ersten erfindungsgemäßen Heizsystems; und
- Fig. 2: ein Blockdiagramm eines zweiten erfindungsgemäßen Heizsystems.

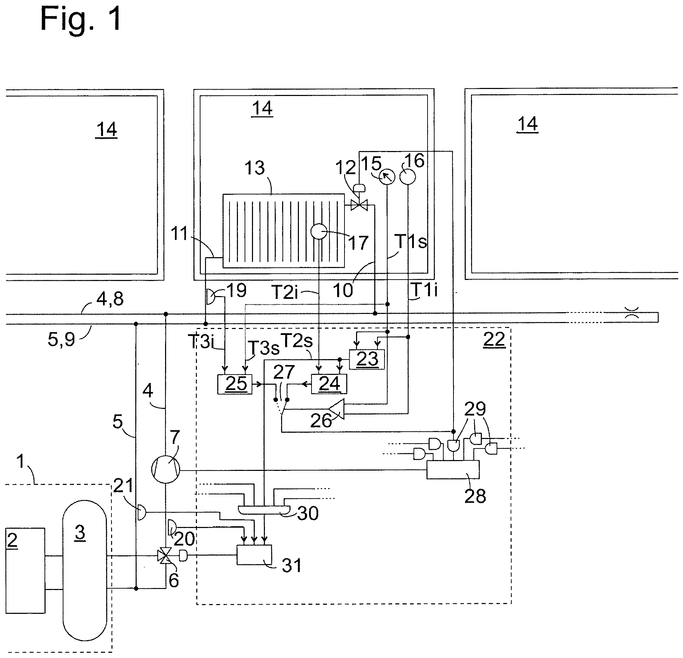

Das in Fig. 1 gezeigte Heizsystem umfasst in an sich bekannter Weise als Wärmequelle 1 einen Heizkessel 2 und einen daran angeschlossenen Speicher 3 für in dem Heizkessel 2 erhitztes Wasser. Ein mit dem Speicher 3 verbundener Heizkreis umfasst eine Vorlaufleitung 4 und eine Rücklaufleitung 5. Die Vorlaufleitung 4 geht aus von einem Mischerventil 6, in dem sich Heißwasser aus dem Speicher 3 und Wasser aus der Rücklaufleitung 5 in veränderbaren Anteilen mischen. Eine Umwälzpumpe 7 treibt die Zirkulation des Heißwassers an. Vor- und Rücklaufleitung 4, 5 umfassen jeweils eine Verteiler- bzw. Sammelleitung 8, 9 und von diesen zu beheizenden Räumen abzweigende Stichleitungen 10 bzw. 11. Zwischen jeder Vorlauf-Stichleitung 10 und zugehöriger Rücklauf-Stichleitung 11 sind jeweils ein Durchflussventil 12 und ein Wärmetauscher 13 eines zu beheizenden Raumes 14 in Reihe verbunden. Die Wärmetauscher 13 können Radiatoren, Fußbodenheizungen, Wandheizungen oder dergleichen sein. Ein zu beheizendes Gebäude umfasst im Allgemeinen mehrere Räume 14, wobei in der Figur der Übersichtlichkeit halber diejenigen Komponenten des Heizsystems, die jedem Raum 14 einzeln zugeordnet sind, nur für einen der Räume 14 dargestellt sind.

So gehört im Allgemeinen zu jedem Raum 14 eine Einstellvorrichtung 15, an dem ein Benutzer eine Solltemperatur T1s des betreffenden Raumes 14 einstellen kann. Ein Temperaturfühler 16 zum Erfassen der tatsächlichen Temperatur T1i des Raumes 14 ist in dem Raum 14 beabstandet vom Wärmetauscher 13 angeordnet, um eine Verfälschung des Temperaturmesswertes T1i durch den Wärmetauscher 13 zu vermeiden.

Ein weiterer Temperaturfühler 17 ist in unmittelbarem Kontakt mit dem Wärmetauscher 13 angeordnet, um die Temperatur T2i des darin zirkulierenden Wassers zu erfassen. Wenn der Wärmetauscher 13 ein im Raum 14 frei angeordneten Radiator ist, ist es im Allgemeinen unproblematisch, einen solchen Temperaturfühler 17 nachträglich zu installieren, wenn ein bereits existierendes Heizsystem gemäß der vorliegenden Erfindung aufgerüstet werden soll. Bei einer Fußboden- oder Wandheizung ist die nachträgliche Anbringung eines solchen Temperaturfühlers nicht oder nur mit hohem Aufwand möglich. In diesem Fall kann der Temperaturfühler 17 auch an einer besser zugänglichen Stelle stromaufwärts vom Wärmetauscher 13 angeordnet sein, zum Beispiel in einem Verteilerkasten, in dem herkömmlicherweise die Vorlauf-Stichleitungen 10 verschiedener Räume 14 eines Stockwerks von der Verteilerleitung 8 abzweigen und auch die Durchflussventile 12 dieser Räume untergebracht sind.

Ein weiterer Temperaturfühler 19 kann zum Erfassen der Rücklauftemperatur T3i in einem stromabwärtigen Bereich jedes Wärmetauschers 13 oder an dessen Rücklauf-Stichleitung 11 vorgesehen sein.

Ein weiterer Temperaturfühler 20 kann zur Erfassung der Vorlauftemperatur an der alle Räume gemeinsam versorgenden Verteilerleitung 8, hier zwischen Mischerventil 6 und Umwälzpumpe 7, angeordnet sein, um eine Regelung des Mischerventils 6 zu ermöglichen. Ebenfalls zur Regelung der Vorlauftemperatur kann ein Temperaturfühler 21 an der Rücklaufleitung 5 dienen.

Die Einstellvorrichtung 15 und die diversen Temperaturfühler 16, 17, 19 bis 21 sind mit einer in der Figur durch ein gestricheltes Rechteck symbolisierten Regelschaltung 22 verbunden. Die Regelschaltung 22 kann an einem einzigen Ort des Gebäudes lokalisiert sein. Dies ist insbesondere dann sinnvoll, wenn sie durch einen einzigen Mikrocomputer implementiert ist, der sämtliche auf die verschiedenen Räume 14 bezogenen Regelungsaufgaben wahrnimmt. Sie kann aber auch an mehreren Orten verteilte Module umfassen, insbesondere mehrere jeweils einem zu beheizenden Raum 14 zugeordnete und vorzugsweise in deren Nähe angeordnete Module sowie ein zentrales, vorzugsweise benachbart zu Wärmequelle 1, Mischerventil 6 und Umwälzpumpe 7 angeordnetes Hauptmodul.

In der Darstellung der Fig. 1 sind im Inneren der Regelschaltung 22 diverse Komponenten eingezeichnet. Alle diese Komponenten können wahlweise durch Hardware oder Software implementiert sein.

Eine dieser Komponenten ist ein Regler 23. Jedem Raum 14 ist ein solcher Regler 23 zugeordnet und mit der Einstellvorrichtung 15 und dem Temperaturfühler 16 des betreffenden Raumes 14 verbunden. Der Regler 23 empfängt die vom Benutzer an der Einstellvorrichtung 15 eingestellte Solltemperatur T1s als Führungsgröße, ermittelt eine Abweichung der vom Temperaturfühler 16 gemeldeten Raumtemperatur T1i von dieser Solltemperatur T1s und gibt als Stellgröße eine Solltemperatur T2s für das im Wärmetauscher 13 zirkulierende Wasser aus. Diese Solltemperatur T2s ist wiederum Führungsgröße eines zweiten Regler 24, der als Ist-Größe die vom Temperaturfühler 17 erfasste Temperatur T2i empfängt und als Ausgangssignal einen Steuerbefehl liefert, der einen gewünschten Öffnungsgrad des Durchflussventils 12 spezifiziert.

Ein weiterer Regler 25 empfängt als Führungsgröße eine Temperatur T3s. Wie in der Figur durch eine punktierte Verbindung angedeutet, kann diese Temperatur T3s wie die Raum-Solltemperatur T1s an der Einstellvorrichtung 15 einstellbar sein. Die Einstellvorrichtung 15 kann z.B. eine einzelne Handhabe wie etwa einen Drehknopf, ein Inkrement/Dekrement-Tastenpaar o.dgl. aufweisen, das zwischen einem Betriebsmodus zum Einstellen von T1s und einem Betriebsmodus zum Einstellen von T3s umschaltbar ist. Es kann aber auch je eine Handhabe für T1s und für T3s vorgesehen sein, oder es ist eine Differenz oder ein anderer zweckmäßiger Zusammenhang zwischen T1s und T3s vorgegeben, anhand dessen die Regelschaltung 22 bei jeder Verstellung von T1s durch einen Benutzer T3s anpasst. Typischerweise ist T3s geringfügig höher als T1s. Diese Führungsgröße T3s wird in dem Regler 24 mit der vom Temperaturfühler 19 erfassten Rücklauftemperatur T3i des Wärmetauschers 13 verglichen, und anhand der Abweichung zwischen beiden wird ein Stellbefehl für das Durchflussventil 12 abgeleitet.

Von welchem der beiden Regler, 24 oder 25, das Durchflussventil 12 tatsächlich Stellbefehle empfängt, hängt in erster Linie davon ab, ob die vom Temperaturfühler 16 gemessene Raumtemperatur T1i höher oder niedriger als die an der Einstellvorrichtung 15 eingestellte Solltemperatur T1s ist. Hier steuert ein Komparator 26 anhand eines Vergleichs dieser beiden Temperaturen einen Schalter 27, der das Durchflussventil 12 wahlweise mit dem Regler 24 oder dem Regler 25 verbindet.

Solange die Raumtemperatur T1i niedriger ist als die Solltemperatur T1s, liegt normaler Heizbetrieb vor, und der Regler 24 ist mit dem Durchflussventil 12 verbunden, um den Warmwasserdurchsatz des Wärmetauschers 13 entsprechend der Abweichung T1s-T1i) zu regeln. Der Regler 23 umfasst wenigstens einen Proportionalanteil und einen Integralanteil. Ein Proportionalitätsfaktor des Proportionalanteils ist vorzugsweise für jeden Raum 14 spezifisch festgelegt, um der Tatsache Rechnung zu tragen, dass zum Erreichen einer gegebenen Soll-Raumtemperatur in einem Raum mit kleinem Wärmetauscher und/oder hohen Wärmeverlusten eine höhere Temperatur des Wärmetauschers erforderlich ist als in einem Raum mit großem Wärmetauscher und/oder geringen Verlusten. Der Integralterm stellt sicher, dass die Temperatur des Wärmetauschers 13, wenn nötig, weit genug variiert wird, um die eingestellte Soll-Raumtemperatur T1s tatsächlich zu erreichen.

Die vom Regler 23 ausgegebene Wärmetauscher-Solltemperatur T2s kann nach oben begrenzt sein. So ist es zum Beispiel, wenn der Wärmetauscher ein Radiator ist, zweckmäßig, dessen Solltemperatur auf maximal 60°C zu beschränken, um zu verhindern, dass ein Bewohner des Raumes 14 beim versehentlichen Berühren des Radiators Verbrennungen davonträgt. Im Falle einer Fußbodenheizung als Wärmetauscher kann die Beschränkung auf eine noch deutlich niedrigere Maximaltemperatur sinnvoll bzw gefordert sein, um beispielsweise eine übermäßige Austrocknung und Rissbildung an einem Parkett-Bodenbelag des Raumes 14 zu verhindern.

Der Regler 24 benötigt keinen Integralanteil in seinem Übertragungsverhalten, wenn der Regler 23 einen hat, es sei denn, es sind die oben erläuterten Maximalwerte von T2s einzuhalten

Wenn die Raumtemperatur T1i eine Umschaltschwelle erreicht hat, die wenigstens der Soll-Raumtemperatur T1s entsprechen sollte, typischerweise aber um ca. 0,3-0,5°C darüber liegt, geht die Regelschaltung 22 in den Auskühlvermeidungsbetrieb über, und die Stellbefehle des Reglers 25 gelangen zum Durchflussventil 12. Folglich wird das Durchflussventil 12 bei Erreichen der Soll-Raumtemperatur nicht vollständig geschlossen, sondern der Regler 25 dosiert den Durchfluss, um die vom Temperaturfühler 19 erfasste Rücklauftemperatur T3i an deren Sollwert T3s anzugleichen. Da der Wärmetauscher 13 weiterhin, wenn auch in geringer Menge, Warmwasser über das Durchflussventil 12 aufnimmt, kann er auch weiterhin Strahlungswärme an die Bewohner des Raumes 14 abgeben, so dass diese nicht das Bedürfnis verspüren, einen Wegfall der Strahlungswärmezufuhr durch ein Heraufsetzen der Raum-Solltemperatur T1s an der Einstellvorrichtung 15 auszugleichen. So wird ein hohes Maß an Wohnkomfort auch bei relativ niedriger Raumtemperatur erreicht.

Unter Umständen, insbesondere wenn der Regler 23 einen hohen negativen Integralanteil angesammelt hat, kann die vom Regler 23 ausgegebene Wärmetauscher-Solltemperatur T2s niedrige Werte annehmen. Insbesondere eine Wärmetauscher-Solltemperatur T2s unterhalb der Raumtemperatur T1i könnte dann zur Sperrung des Durchflussventils 9 und in der Folge zum Auskühlen des Wärmetauschers 13 führen. Um dies auszuschließen, kann vorgesehen sein, dass die Regelschaltung auch dann in den Auskühlvermeidungsbetrieb übergeht, wenn die Wärmetauscher-Solltemperatur T2s unter einen vorgegebenen Schwellwert fällt.

Insbesondere wenn der Wärmetauscher 13 eine Fußbodenheizung ist und der Fußboden schlecht gegen einen darunterliegenden Raum gedämmt ist, kann der Fall auftreten, dass der Wärmetauscher im Heizbetrieb viel Wärme an den darunterliegenden Raum verliert und der Fußboden bereits auszukühlen beginnt, während die Raumtemperatur T1s noch nahe am Sollwert ist. Diese Abkühlung ist erkennbar an einem niedrigen Messwert der Rücklauftemperatur T3i. Daher kann vorgesehen werden, dass auch ein Abfallen dieser Rücklauftemperatur T3i unter einen Schwellwert eine Umschaltung in den Auskühlvermeidungsbetrieb auslöst.

Ein Addierer 28 empfängt die von den Reglern 24, 25 der verschiedenen Räume 14 des Gebäudes spezifizierten Ventilöffnungsgrade, jeweils mit einem für den betreffenden Raum 14 spezifischen Gewichtungsfaktor in einer Gewichtungsstufe 29 gewichtet, und addiert diese, um entsprechend der erhaltenen Summe die Leistung der Umwälzpumpe 7 zu steuern. Wenn die Regler 24 bzw. 25 aller Räume 14 einen Öffnungsgrad Null spezifizieren, alle Durchflussventile 12 also geschlossen sind und in keinem Raum 14 Heizenergie benötigt wird, ist auch die vom Addierer 28 gesteuerte Leistung der Umwälzpumpe 7 Null, das heißt die Umwälzpumpe 7 ist komplett ausgeschaltet, und es besteht kein Druckgefälle zwischen Vor- und Rücklaufleitung 4 bzw. 5. Es könnte vorgesehen werden, dass in einer solchen Situation der Addierer 28 auch den Heizkessel 2 komplett ausschaltet. Zweckmäßig ist dies insbesondere dann, wenn der Speicher 3 Wärme nicht nur vom Heizkessel 2, sondern beispielsweise auch von einem (in der Figur nicht dargestellten) Solarkollektor empfängt.

Die Gewichtungsfaktoren der Gewichtungsstufen 29 berücksichtigen die Entfernung zwischen den Räumen 14 und der Umwälzpumpe 7. Um einen gegebenen Durchsatz an Warmwasser in einem zur Umwälzpumpe 7 eng benachbarten Raum, insbesondere im Keller oder im Erdgeschoß eines Gebäudes, aufrecht zu erhalten, ist erheblich weniger Pumpenleistung erforderlich, als wenn ein weit entfernter Raum in einem Dachgeschoß über lange Strecken von Vor- und Rücklaufleitung 4, 5 versorgt werden muss. Durch eine geeignete Wahl der Gewichtungsfaktoren in den Gewichtungsstufen 29 wird erreicht, dass, wenn zum Beispiel nur ein Kellerraum Wärmebedarf hat, die Umwälzpumpe 7 mit einer sehr geringen Leistung läuft, um den benötigten Warmwasserdurchfluss zu erzeugen, wohingegen, wenn nur ein gleichgroßer Dachgeschoßraum Wärmebedarf hat, zur Erzeugung desselben Durchflusses eine erheblich höhere Pumpenleistung bereitgestellt wird. Die Gefahr, dass einzelne Räume mit zu hoher Pumpenleistung versorgt werden und Strömungsgeräusche hörbar werden, kann so beseitigt werden.

Eine Maximalwertschaltung 30 ist mit den Ausgängen der Regler 23 aller Räume 14 verbunden, um von diesen die Solltemperatur T2s des Wärmetauschers 13 des betreffenden Raumes 14 zu empfangen und die höchste dieser Solltemperaturen T2s auszugeben. Das Ergebnis wird als Führungsgröße an einen weiteren Regler 31 weitergeleitet, der basierend hierauf und auf der vom Temperaturfühler 20 gemessenen Vorlauftemperatur das Mischerventil 6 steuert. Die unvermeidliche Abkühlung des Wassers auf dem Weg vom Mischerventil 6 zu den Wärmetauschern 13 und mögliche Offsets der Temperatursensoren werden über die Integralanteile der überlagerten Regler 23, 24 kompensiert.

Indem der Regler 31 die Vorlauftemperatur jeweils anhand der höchsten Wärmetauscher-Solltemperatur regelt, wird sichergestellt, dass in jedem Raum 14 die zum Erreichen der für diesen Raum eingestellten Solltemperatur T1s erforderliche Heizleistung bereitgestellt werden kann. Da gleichzeitig die Vorlauftemperatur nicht höher ist, als zum Bereitstellen dieser Heizleistung unbedingt erforderlich, werden unnötige Wärmeverluste auf der Vorlaufleitung 4 vermieden.

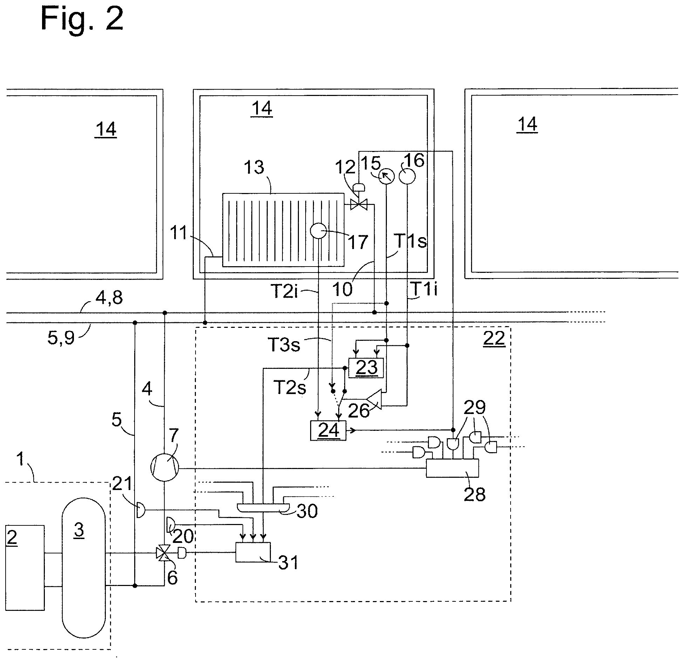

Fig. 2 zeigt eine vereinfachte Variante des Heizsystems. Gleiche Komponenten wie in der Fig. 1 sind hier mit gleichen Bezugszeichen versehen und werden nur insoweit erneut erläutert, als sich ihre Anordnung oder Funktionsweise von derjenigen der Fig. 1 unterscheiden. Der Schalter 27 ist hier am Ausgang des ersten Reglers 23 angeordnet und gibt im Heizbetrieb die Solltemperatur T2s, im Auskühlvermeidungsbetrieb die Solltemperatur T3s als Sollgröße auf den Regler 24, so dass dieser im Heizbetrieb die vom Temperaturfühler 17 erfasste Temperatur T2i auf den Sollwert T2s, im Auskühlvermeidungsbetrieb auf T3s regelt. Der Temperaturfühler 19 ist entfallen; seine Aufgabe wird vom Temperaturfühler 17 übernommen.

### Bezugszeichen

- 1: Wärmequelle
- 2: Heizkessel
- 3: Speicher
- 4: Vorlaufleitung
- 5: Rücklaufleitung
- 6: Mischerventil
- 7: Umwälzpumpe
- 8: Verteilerleitung
- 9: Sammelleitung
- 10: Vorlauf-Stichleitung
- 11: Rücklauf-Stichleitung
- 12: Durchflussventil
- 13: Wärmetauscher
- 14: Raum
- 15: Einstellvorrichtung
- 16: Temperaturfühler
- 17: Temperaturfühler
- 18:
- 19: Temperaturfühler
- 20: Temperaturfühler
- 21: Temperaturfühler
- 22: Regelschaltung
- 23: Regler
- 24: Regler
- 25: Regler
- 26: Komparator
- 27: Schalter
- 28: Addierer
- 29: Gewichtungsstufe
- 30: Maximalwertschaltung
- 31: Regler

## Patentansprüche

1. Heizsystem mit wenigstens einem ersten Temperaturfühler (16) zum Erfassen einer Raumtemperatur (T1i) eines zu beheizenden Raumes (14), wenigstens einem Ventil (12) zum Steuern des Durchflusses eines Wärmeträgermediums durch einen Wärmetauscher (13) anhand von Stellbefehlen und einer mit dem ersten Temperaturfühler (16) und dem Ventil (12) verbundenen Regelschaltung (22) zum Erzeugen der Stellbefehle, wobei die Regelschaltung (22) mit einem zweiten Temperaturfühler (19) verbunden ist, der angeordnet ist, um eine erste Temperatur (T3i) des Wärmeträgermediums nach Durchlaufen wenigstens eines Teils des Wärmetauschers (13) zu erfassen, **dadurch gekennzeichnet, dass** die Regelschaltung eingerichtet ist, die Stellbefehle auf Grundlage der ersten Temperatur (T3i) als Regelgröße zu erzeugen, wenn die Raumtemperatur (T1i) über einem Raumtemperatur-Sollwert (T1s) liegt.

2. Heizsystem nach Anspruch 1, **dadurch gekennzeichnet, dass** die Regelschaltung (22) eingerichtet ist, die Stellbefehle auch dann auf Grundlage der ersten Temperatur (T3i) als Regelgröße zu erzeugen, wenn die erste Temperatur (T3i) einen Schwellwert unterschreitet.

3. Heizsystem nach Anspruch 1 oder 2, **dadurch gekennzeichnet, dass** der zweite Temperaturfühler (19) an einem Auslass des Wärmetauschers (13) angeordnet ist.

4. Heizsystem nach Anspruch 1, 2 oder 3, **dadurch gekennzeichnet, dass** die Regelschaltung eingerichtet ist, die Raumtemperatur (T1i) als Regelgröße einzusetzen, wenn die Raumtemperatur (T1i) unter dem Raumtemperatur-Sollwert (T1s) liegt.

5. Heizsystem nach einem der vorhergehenden Ansprüche, **dadurch gekennzeichnet, dass** ein Sollwert (T3s) der ersten Temperatur durch einen Benutzer einstellbar ist.

6. Heizsystem nach einem der vorhergehenden Ansprüche, **dadurch gekennzeichnet, dass** die Regelschaltung (22) einen ersten Regler (23) zum Festlegen eines Sollwerts (T2s) einer zweiten Temperatur des Wärmeträgermediums anhand der Raumtemperatur (T1i) und einen zweiten Regler (24) zum Erzeugen der Stellbefehle auf Grundlage der erfassten zweiten Temperatur (T2i) als Regelgröße umfasst.

7. Heizsystem nach Anspruch 6, **dadurch gekennzeichnet, dass** ein dritter Temperaturfühler (17) zum Erfassen der zweiten Temperatur (T2i) des Wärmeträgermediums stromaufwärts vom zweiten Temperaturfühler (19) am Wärmetauscher (13) oder an einer stromaufwärts vom Wärmetauscher (13) gelegenen Vorlaufleitung (4) vorgesehen ist.

8. Heizsystem nach Anspruch 6 oder 7, **dadurch gekennzeichnet, dass** die Regelschaltung (22) eingerichtet ist, die die Stellbefehle auch dann auf Grundlage der ersten Temperatur (T3i) als Regelgröße zu erzeugen, wenn die zweite Temperatur (T2i) einen Schwellwert unterschreitet.

9. Heizsystem nach einem der Ansprüche 6 bis 8, **dadurch gekennzeichnet, dass** wenigstens einer der Regler (23, 24) einen Integralanteil aufweist.

10. Heizsystem nach einem der Ansprüche 6 bis 9, **dadurch gekennzeichnet, dass** die Regelschaltung (22) mit einer Wärmequelle (1) verbunden ist, um die Abgabetemperatur des von der Wärmequelle (1) abgegebenen Wärmeträgermediums anhand des Sollwerts (T2s) der zweiten Temperatur des Wärmeträgermediums zu regeln.

11. Heizsystem nach Anspruch 10, **dadurch gekennzeichnet, dass** die Regelschaltung (22) eingerichtet ist, die Abgabetemperatur heraufzusetzen, wenn der Sollwert der zweiten Temperatur (T2s) bei vollständig geöffnetem Ventil (9) nicht erreicht wird.

12. Heizsystem nach Anspruch 10 oder 11, **dadurch gekennzeichnet, dass** die Regelschaltung (22) mit mehreren ersten Temperaturfühlern (16) verbunden ist, dass jedem der ersten Temperaturfühler (16) ein erster Regler (23) zum Festlegen eines Sollwerts (T2s) einer zweiten Temperatur anhand der von diesem ersten Temperaturfühler (16) erfassten Raumtemperatur (T1i) zugeordnet ist und die Regelschaltung (22) eingerichtet ist, die Abgabetemperatur anhand des höchsten festgelegten Sollwerts (T2s) der zweiten Temperatur zu regeln.

13. Heizsystem nach einem der vorhergehenden Ansprüche, **dadurch gekennzeichnet, dass** es mehrere Ventile (9) zum Steuern des Durchflusses des Wärmeträgermediums durch jeweils einen dem Ventil (9) zugeordneten Wärmetauscher (13) umfasst und eine Umwälzpumpe (7) immer dann ausgeschaltet ist, wenn alle Ventile (9) geschlossen sind.

14. Heizsystem nach einem der vorhergehenden Ansprüche, **dadurch gekennzeichnet, dass** es mehrere Ventile (9) zum Steuern des Durchflusses des Wärmeträgermediums durch jeweils einen dem Ventil (9) zugeordneten Wärmetauscher (13) umfasst und dass die Regelschaltung (22) eingerichtet ist, den Öffnungsgrad jedes Ventils (9) einzeln zu erfassen und die Leistung der Umwälzpumpe (7) anhand der Öffnungsgrade der Ventile (9) zu steuern.

15. Verfahren zum Betreiben eines Heizsystems mit den Schritten:
Erfassen einer Raumtemperatur eines zu beheizenden Raumes,
Erfassen einer ersten Temperatur eines Wärmeträgermediums nach Durchlaufen wenigstens eines Teils eines Wärmetauschers,
**gekennzeichnet durch**
wenn die Raumtemperatur über einem Raumtemperatur-Sollwert liegt, Steuern des Durchflusses eines Wärmeträgermediums durch den Wärmetauscher unter Einsatz der ersten Temperatur als Regelgröße.

16. Computerprogramm-Produkt mit Programmcode-Mitteln, die einen Computer befähigen, als die Regelschaltung des Heizsystems nach einem der Ansprüche 1 bis 14 zu arbeiten oder das Verfahren nach Anspruch 15 auszuführen.

## Claims

1. Heating system having at least one first temperature sensor (16) for sensing a room temperature (T1i) of a room to be heated (14), at least one valve (12) for controlling the flow of a heat transfer medium through a heat exchanger (13) by reference to setting commands, and a regulating circuit (22), connected to the first temperature sensor (16) and the valve (12), for producing the setting commands, the regulating circuit (22) being connected to a second temperature sensor (19) which is positioned to sense a first temperature (T3i) of the heat transfer medium after the latter has passed through at least part of the heat exchanger (13), **characterised in that** the regulating circuit is adapted to produce the setting commands using the first temperature (T3i) as a regulating variable when the room temperature (T1i) is above a desired room temperature value (T1s).

2. Heating system according to claim 1, **characterised in that** the regulating circuit (22) is adapted to produce the setting commands using the first temperature (T3i) as a regulating variable also when the first temperature (T3i) drops below a threshold value.

3. Heating system according to claim 1 or 2, **characterised in that** the second temperature sensor (19) is positioned at an outlet of the heat exchanger (13).

4. Heating system according to claim 1, 2 or 3, **characterised in that** the regulating circuit is adapted to use the room temperature (T1i) as a regulating variable when the room temperature (T1i) is below the desired room temperature value (T1s).

5. Heating system according to one of the preceding claims, **characterised in that** a desired value (T3s) for the first temperature can be set by a user.

6. Heating system according to one of the preceding claims, **characterised in that** the regulating circuit (22) comprises a first regulator (23) for laying down a desired value (T2s) for a second temperature of the heat transfer medium by reference to the room temperature (Tli), and a second regulator (24) for producing the setting commands using the sensed second temperature (T2i) as regulating variable.

7. Heating system according to claim 6, **characterised in that** a third temperature sensor (17) for sensing the second temperature (T2i) of the heat transfer medium upstream of the second temperature sensor (19) is provided on the heat exchanger (13) or on a flow-side pipe (4) situated upstream of the heat exchanger (13).

8. Heating system according to claim 6 or 7, **characterised in that** the regulating circuit (22) is adapted to produce the setting commands using the first temperature (T3i) as regulating variable also when the second temperature (T2i) drops below a threshold value.

9. Heating system according to one of claims 6 to 8, **characterised in that** at least one of the regulators (23, 24) has an integral component.

10. Heating system according one of claims 6 to 9, **characterised in that** the regulating circuit (22) is connected to a heat source (1) in order to regulate the outlet temperature of the heat transfer medium dispensed from the heat source (1) by reference to the desired value (T2s) for the second temperature of the heat transfer medium.

11. Heating system according to claim 10, **characterised in that** the regulating circuit (22) is adapted to increase the outlet temperature if the desired value for the second temperature (T2s) is not reached with the valve (9) fully open.

12. Heating system according to claim 10 or 11, **characterised in that** the regulating circuit (22) is connected to a plurality of first temperature sensors (16), and **in that** each of the first temperature sensors (16) has associated with it a first regulator (23) for laying down a desired value (T2s) for a second temperature by reference to the room temperature (T1i) sensed by this first temperature sensor (16), and the regulating circuit (22) is adapted to regulate the outlet temperature by reference to the highest desired value (T2s) laid down for the second temperature.

13. Heating system according to one of the preceding claims, **characterised in that** it comprises a plurality of valves (9) for controlling the flow of the heat transfer medium through the respective heat exchangers (13) associated with the valves (9), and a circulating pump (7) is switched off whenever all the valves (9) are closed.

14. Heating system according to one of the preceding claims, **characterised in that** it comprises a plurality of valves (9) for controlling the flow of the heat transfer medium through the respective heat exchangers (13) associated with the valves (9), and **in that** the regulating circuit (22) is adapted to sense the degree of opening of each valve (9) separately and to control the output of the circulating pump (7) by reference to the degrees of opening of the valves (9).

15. Method of operating a heating system having the following steps:
sensing of a room temperature of a room to be heated,
sensing of a first temperature of a heat transfer medium after the latter's passage through at least one part of a heat exchanger,
**characterised by**
when the room temperature is above a desired value for the room temperature, controlling of the flow of a heat transfer medium through the heat exchanger using the first temperature as a regulating variable.

16. Computer program product having program code means which enable a computer to operate as the regulating circuit of the heating system according to one of claims 1 to 14, or to carry out the method according to claim 15.

## Revendications

1. Système de chauffage ayant au moins un premier capteur de température (16) pour capter une température ambiante (T1i) d'une pièce à chauffer (14), au moins une vanne (12) pour contrôler le flux d'un fluide caloporteur à travers un échangeur de chaleur (13) par rapport à des commandes d'ajustage, et un circuit de régulation (22), connecté au premier capteur de température (16) et à la vanne (12), pour produire les commandes d'ajustage, le circuit de régulation (22) étant connecté à un deuxième capteur de température (19) qui est positionné pour capter une première température (T3i) du fluide caloporteur après que ce dernier soit passé à travers au moins une partie de l'échangeur de chaleur (13), **caractérisé en ce que** le circuit de régulation est conçu pour produire les commandes d'ajustage en utilisant la première température (T3i) comme grandeur de régulation quand la température ambiante (T1i) est au-dessus d'une valeur de température ambiante souhaitée (T1s).

2. Système de chauffage selon la revendication 1, **caractérisé en ce que** le circuit de régulation (22) est aussi conçu pour produire les commandes d'ajustage utilisant la première température (T3i) comme grandeur de régulation quand la première température (T3i) tombe au-dessous d'une valeur seuil.

3. Système de chauffage selon la revendication 1 ou 2, **caractérisé en ce que** le deuxième capteur de température (19) est positionné au niveau d'une sortie de l'échangeur de chaleur (13).

4. Système de chauffage selon la revendication 1, 2 ou 3, **caractérisé en ce que** le circuit de régulation est conçu pour utiliser la température ambiante (T1i) comme une grandeur de régulation quand la température ambiante (T1i) est au-dessous de la valeur de température ambiante souhaitée (T1s).

5. Système de chauffage selon l'une quelconque des revendications précédentes, **caractérisé en ce qu'**une valeur souhaitée (T3s) pour la première température peut être réglée par un utilisateur.

6. Système de chauffage selon l'une quelconque des revendications précédentes, **caractérisé en ce que** le circuit de régulation (22) comprend un premier régulateur (23) pour définir une valeur souhaitée (T2s) pour une deuxième température du fluide caloporteur par rapport à la température ambiante (T1i), et un deuxième régulateur (24) pour produire les commandes d'ajustage utilisant comme grandeur de régulation la deuxième température (T2i) captée.

7. Système de chauffage selon la revendication 6, **caractérisé en ce qu'**un troisième capteur de température (17) pour capter la deuxième température (T2i) du fluide caloporteur en amont du deuxième capteur de température (19) est prévu sur l'échangeur de chaleur (13) ou sur un tuyau d'entrée (4) situé en amont de l'échangeur de chaleur (13) .

8. Système de chauffage selon la revendication 6 ou 7, **caractérisé en ce que** le circuit de régulation (22) est aussi conçu pour produire les commandes d'ajustage en utilisant la première température (T3i) comme grandeur de régulation quand la deuxième température (T2i) tombe au-dessous d'une valeur seuil.

9. Système de chauffage selon l'une quelconque des revendications 6 à 8, **caractérisé en ce qu'**au moins un des régulateurs (23, 24) a une composante intégrale.

10. Système de chauffage selon l'une quelconque des revendications 6 à 9, **caractérisé en ce que** le circuit de régulation (22) est connecté à une source de chaleur (1) afin de réguler la température de sortie du fluide caloporteur distribué à partir de la source de chaleur (1) par rapport à la valeur souhaitée (T2s) pour la deuxième température du fluide caloporteur.

11. Système de chauffage selon la revendication 10, **caractérisé en ce que** le circuit de régulation (22) est conçu pour augmenter la température de sortie si la valeur souhaitée pour la deuxième température (T2s) n'est pas atteinte avec la vanne (9) entièrement ouverte.

12. Système de chauffage selon la revendication 10 ou 11, **caractérisé en ce que** le circuit de régulation (22) est connecté à une pluralité de premiers capteurs de température (16), et **en ce qu'**un premier régulateur (23) est associé à chacun des premiers capteurs de température (16) pour définir une valeur souhaitée (T2s) pour une deuxième température par rapport à la température ambiante (T1i) captée par ce premier capteur de température (16), et **en ce que** le circuit de régulation (22) est conçu pour réguler la température de sortie par rapport à la valeur souhaitée la plus haute (T2s) définie pour la deuxième température.

13. Système de chauffage selon l'une quelconque des revendications précédentes, **caractérisé en ce qu'**il comprend une pluralité de vannes (9) pour contrôler le flux du fluide caloporteur à travers les échangeurs de chaleur respectifs (13) associés aux vannes (9), et une pompe de circulation (7) est éteinte chaque fois que toutes les vannes (9) sont fermées.

14. Système de chauffage selon l'une quelconque des revendications précédentes, **caractérisé en ce qu'**il comprend une pluralité de vannes (9) pour contrôler le flux du fluide caloporteur à travers les échangeurs de chaleur respectifs (13) associés aux vannes (9), et **en ce que** le circuit de régulation (22) est conçu pour capter le degré d'ouverture de chaque vanne (9) séparément et pour contrôler la puissance de la pompe de circulation (7) par rapport aux degrés d'ouverture des vannes (9).

15. Procédé de fonctionnement d'un système de chauffage ayant les étapes suivantes :
le captage d'une température ambiante d'une pièce à chauffer,
le captage d'une première température d'un fluide caloporteur après le passage de ce dernier à travers au moins une partie d'un échangeur de chaleur,
**caractérisé par**
quand la température ambiante est au-dessus d'une valeur souhaitée pour la température ambiante, le contrôle du flux d'un fluide caloporteur à travers l'échangeur de chaleur en utilisant la première température comme grandeur de régulation.

16. Produit de programme d'ordinateur ayant des moyens de code de programme qui permettent à un ordinateur de fonctionner comme le circuit de régulation du système de chauffage selon l'une des revendications 1 à 14, ou de réaliser le procédé selon la revendication 15.
